(19) **Europäisches Patentamt / European Patent Office / Office européen des brevets**

(11) **EP 4 741 716 A1**

(12) **EUROPEAN PATENT APPLICATION**
published in accordance with Art. 153(4) EPC

(43) Date of publication:
**13.05.2026 Bulletin 2026/20**

(21) Application number: **24882848.5**

(22) Date of filing: **24.10.2024**

(51) International Patent Classification (IPC):
*F24C 7/08* (2006.01)    *F24C 3/12* (2006.01)
*H04N 23/57* (2023.01)    *H04N 7/18* (2006.01)
*G03B 21/14* (2006.01)    *G01J 5/48* (2022.01)
*G01J 5/02* (2022.01)

(52) Cooperative Patent Classification (CPC):
**F24C 3/12; F24C 7/08; G01J 5/02; G01J 5/48; G03B 21/14; H04N 7/18; H04N 23/57**

(86) International application number:
**PCT/KR2024/016278**

(87) International publication number:
**WO 2025/089821 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 KR 20230145897**

(71) Applicant: Samsung Electronics Co., Ltd.
Suwon-si, Gyeonggi-do 16677 (KR)

(72) Inventors:
• **KA, Keehwan**
Suwon-si, Gyeonggi-do 16677 (KR)
• **ROH, Mindo**
Suwon-si, Gyeonggi-do 16677 (KR)
• **JEON, Hyeongi**
Suwon-si, Gyeonggi-do 16677 (KR)

(74) Representative: **Appleyard Lees IP LLP**
G Mill
Dean Clough Industrial Park
Halifax HX3 5AH (GB)

(54) **COOKING APPLIANCE AND CONTROL METHOD THEREFOR**

(57) A cooking apparatus and a method of controlling same. The cooking apparatus includes a thermal imaging camera to measure a temperature of food, a protective window, between the thermal imaging camera and the food, to protect the thermal imaging camera, and a processor to obtain a thermal image through the thermal imaging camera, divide the thermal image into a cooking food area including the food, a first inner wall area covered by the protective window, and a second inner wall area not covered by the protective window other than the cooking food area, obtain a correction parameter to correct influence by the protective window on measurement obtained through the thermal imaging camera based on information of the first inner wall area and the second inner wall area, and correct the temperature of the food measured by the thermal imaging camera through the cooking food area based on the correction parameter.

EP 4 741 716 A1

# FIG. 3

```
                    ┌─────────────┐
                    │    START    │
                    └──────┬──────┘
                           │
         ┌─────────────────┴─────────────────┐
         │      START COOKING OPERATION       │──S310
         └─────────────────┬─────────────────┘
                           │
         ┌─────────────────┴─────────────────┐
         │  OBTAIN THERMAL IMAGE THROUGH THERMAL │──S320
         │          IMAGING CAMERA            │
         └─────────────────┬─────────────────┘
                           │
         ┌─────────────────┴─────────────────┐
         │   DIVIDE THERMAL IMAGE INTO PLURALITY │──S330
         │             OF AREAS               │
         └─────────────────┬─────────────────┘
                           │
         ┌─────────────────┴─────────────────┐
         │   OBTAIN FIRST TEMPERATURE THROUGH FIRST │
         │    INNER WALL AREA AND OBTAIN SECOND │──S340
         │ TEMPERATURE THROUGH SECOND INNER WALL AREA │
         └─────────────────┬─────────────────┘
                           │
         ┌─────────────────┴─────────────────┐
         │   OBTAIN CORRECTION PARAMETER BASED ON │
         │  DIFFERENCE BETWEEN FIRST TEMPERATURE │──S350
         │       AND SECOND TEMPERATURE       │
         └─────────────────┬─────────────────┘
                           │
         ┌─────────────────┴─────────────────┐
         │   OBTAIN TEMPERATURE OF COOKING FOOD │──S360
         │        THROUGH COOKING FOOD AREA    │
         └─────────────────┬─────────────────┘
                           │
         ┌─────────────────┴─────────────────┐
         │  CORRECT TEMPERATURE OF COOKING FOOD │──S370
         │     BASED ON CORRECTION PARAMETER   │
         └─────────────────┬─────────────────┘
                           │
                      ╱────┴────╲
                 ╱ HAS EVENT      ╲       S380
              ╱  RELATED TO UPDATE  ╲
          Y ╱ OF CORRECTION PARAMETER ╲
             ╲     OCCURRED?        ╱
                 ╲────────┬────────╱
                          │N
                     ╱────┴────╲
                 ╱              ╲      S390
              ╱   DOES COOKING    ╲  N
             ╲   OPERATION END?   ╱
                 ╲────────┬──────╱
                          │Y
                    ┌─────┴─────┐
                    │    END     │
                    └───────────┘
```

## Description

[Technical Field]

The disclosure relates to a cooking apparatus and a method of controlling the cooking apparatus, and more particularly, to a cooking apparatus for measuring the temperature of cooking food in the cooking apparatus and a method of controlling the cooking apparatus.

[Background Art]

A cooking apparatus is an apparatus for heating and cooking food, and refers to an apparatus capable of providing various functions related to cooking, such as heating, defrosting, drying, and sterilizing the food. Examples of such a cooking apparatus include ovens, such as a gas oven or an electric oven, a microwave heating apparatus (hereinafter referred to as microwave), an air fryer, etc. In particular, a cooking apparatus may bake, fry, steam, boil, or defrost food by using a cooking chamber that provides a cooking space and a heating means that heats the inside of the cooking chamber.

Recent cooking apparatuses may measure the temperature of food by using various devices (e.g., a thermal imaging camera, a sensor, etc.) inside the cooking apparatus to measure the temperature, and control a heating operation of the food based on the measured temperature.

When the thermal imaging camera is provided in the cooking apparatus, the cooking apparatus may include a protective window between the thermal imaging camera and the food to protect the thermal imaging camera from contamination or heat. However, when the cooking apparatus measures the temperature of the food by using the thermal imaging camera, because the protective window is between the thermal imaging camera and the food, there is a limitation that the temperature of the food may not be accurately measured due to the protective window.

Therefore, when the cooking apparatus measures the temperature of the food by using the thermal imaging camera, a method of more accurately measuring the temperature of the food by correcting the influence of the protective window is required.

[Detailed Description of the Invention]

[Technical Task]

According to an embodiment of the disclosure, a cooking apparatus includes a thermal imaging camera configured to measure a temperature of food, a protective window, between the thermal imaging camera and the food, configured to protect the thermal imaging camera, and a processor configured to obtain a thermal image through the thermal imaging camera, divide the thermal image into a cooking food area including the food, a first inner wall area covered by the protective window, and a second inner wall area not covered by the protective window other than the cooking food area, obtain a correction parameter to correct influence by the protective window on measurement obtained through the thermal imaging camera based on information obtained for the first inner wall area and the second inner wall area, and correct the temperature of the food measured by the thermal imaging camera through the cooking food area based on the correction parameter.

The processor may identify information about a difference between a first temperature obtained through the first inner wall area and a second temperature obtained through the second inner wall area, and obtain the correction parameter corresponding to the information about the difference between the first temperature and the second temperature.

The correction parameter is greater based on a difference between the first temperature and the second temperature being greater than when the difference between the first temperature and the second temperature is less.

The protective window may be asymmetrical with respect to the thermal imaging camera such as to cover a part of an inner wall of the cooking apparatus and not cover a remaining part of the inner wall of the cooking apparatus within a photographing range of the thermal imaging camera.

The processor may update the correction parameter when based on a preset event related to a temperature change for at least one of a plurality of areas included in the thermal image occurring.

The preset event may be a first preset event that may include an event in which a temperature change obtained through the first inner wall area or the second inner wall area rises or falls more than a preset value or an event in which a change in a difference between a first temperature obtained through the first inner wall area and a second temperature obtained through the second inner wall area is greater than or equal to the preset value.

The processor may update the correction parameter based on a preset event in which a setting related to the thermal imaging camera is changed occurs.

The processor may update the correction parameter every preset period.

A thermally conductive material may be coated on an area of the protective window, and the processor may obtain information about the temperature of the protective window through an area of the thermal image corresponding to the area, obtain a correction parameter by the protective window based on the information about the temperature of the protection window, and correct the temperature of the food obtained through the cooking food area based on the correction parameter.

A thermistor may be attached onto an area of the protective window, and the processor may obtain information about the temperature of the protective window through the thermistor, obtain a correction parameter by the protective window based on the information about the temperature of the protection window, and correct the temperature of the food obtained through the cooking food area based on the correction parameter.

According to an embodiment of the disclosure, a method of controlling a cooking apparatus including a thermal imaging camera configured to measure a temperature of food and a protective window, between the thermal imaging camera and the food, configured to protect the thermal imaging camera includes obtaining a thermal image through the thermal imaging camera, dividing the thermal image into a cooking food area including the food, a first inner wall area covered by the protective window, and a second inner wall area not covered by the protective window other than the cooking food area, obtaining a correction parameter to correct influence by the protective window on measurement obtained through the thermal imaging camera based on information obtained for the first inner wall area and the second inner wall area of the thermal image, and correcting the temperature of the food measured by the thermal imaging camera through the cooking food area based on the correction parameter.

The obtaining of the correction parameter may include identifying information about a difference between a first temperature obtained through the first inner wall area and a second temperature obtained through the second inner wall area, and obtaining a correction parameter corresponding to the information about the difference between the first temperature and the second temperature.

The correction parameter is greater based on a difference between the first temperature and the second temperature being greater than when the difference between the first temperature and the second temperature is less.

The protective window may be asymmetrical with respect to the thermal imaging camera such as to cover a part of an inner wall of the cooking apparatus and not to cover a remaining part the inner wall of the cooking apparatus within a photographing range of the thermal imaging camera.

The method may further include updating the correction parameter based on a preset event related to a temperature change for at least one of a plurality of areas included in the thermal image occurring.

The preset event may be a first preset event that may include an event in which a temperature change obtained through the first inner wall area or the second inner wall area rises or falls more than a preset value or an event in which a change in a difference between a first temperature obtained through the first inner wall area and a second temperature obtained through the second inner wall area is greater than or equal to the preset value.

The method may further include updating the correction parameter when a second preset event in which setting related to the thermal imaging camera is changed occurs.

The method may further include updating the correction parameter every preset period.

A thermally conductive material may be coated on an area of the protective window, and the obtaining of the correction parameter may include obtaining information about the temperature of the protective window through an area of the thermal image corresponding to the area, and obtaining a correction parameter by the protective window based on the information about the temperature of the protection window.

A thermistor may be attached onto an area of the protective window, and the obtaining of the correction parameter may include obtaining information about the temperature of the protective window through the thermistor, and obtaining a correction parameter by the protective window based on the information about the temperature of the protection window.

[BRIEF DESCRIPTION OF THE DRAWINGS]

FIG. 1 is a block diagram showing the configuration of a cooking apparatus according to an embodiment of the disclosure;
FIG. 2 is a diagram showing a thermal imaging camera and a protective window according to an embodiment of the disclosure;
FIG. 3 is a flowchart for explaining a method of correcting the temperature of food according to the influence of the protective window according to an embodiment of the disclosure;
FIG. 4 is a diagram showing a plurality of areas included in a thermal image according to an embodiment of the disclosure;
FIGS. 5A, 5B to 5C are diagrams showing thermal images captured by a turntable type cooking apparatus according to various embodiments of the disclosure;

FIGS. 6A, 6B to 6C are diagrams showing thermal images captured by a flat-bed type cooking apparatus according to various embodiments of the disclosure;

FIGS. 7A, 7B, 7C to 7D are diagrams showing thermal images captured when a material having a high thermal conductivity is coated on the protective window to directly measure the temperature of the protective window according to various embodiments of the disclosure;

FIG. 8 is a diagram showing thermal images captured when a thermistor is attached onto the protective window to directly measure the temperature of the protective window according to various embodiments of the disclosure;

FIG. 9 is a flowchart for explaining a method of correcting the temperature of food by measuring the temperature of the protective window according to an embodiment of the disclosure; and

FIG. 10 is a flowchart for explaining a method of controlling a cooking apparatus according to an embodiment of the disclosure.

[Mode for Implementing the Invention]

As the disclosure allows for various changes and numerous embodiments, particular embodiments will be illustrated in the drawings and described in detail in the written description. It should be understood, however, that there is no intent to limit embodiments of the disclosure to the particular forms disclosed, but conversely, embodiments of the disclosure are to cover all modifications, equivalents, and alternatives falling within the spirit and scope of the disclosure. In connection with the description of the drawings, like reference numerals denote like elements in the drawings.

In the description of the disclosure, a detailed description of known related art will be omitted if it is determined that the gist of the disclosure may be unnecessarily obscured.

In addition, the following embodiments may be modified into various other forms, and the scope of the technical idea of the disclosure is not limited to the following embodiments. Rather, these embodiments are provided to make the disclosure more faithful and complete and to completely convey the technical idea of the disclosure to one of ordinary in the art.

The terms used in the disclosure are used to illustrate the embodiments and are not intended to limit and/or restrict the disclosure. The singular forms "a," "an," and "the" include plural expressions unless the context clearly dictates otherwise.

In the disclosure, the expressions "have", "may have", "include" and "comprise", or "may include" and "may comprise" used herein indicate existence of corresponding features (e.g., elements such as numeric values, functions, operations, or components) but do not exclude presence of additional features

In the disclosure, the expressions "A or B", "at least one of A or/and B", "one or more of A or/and B", etc. may include all combinations of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms such as "first", "second", etc. used herein may refer to various elements regardless of the order and/or priority of the elements and may be used to distinguish an element from another element, not to limit the elements.

When it is mentioned that a component (e.g., a first component) is "(operatively or communicatively) coupled with/to" or "connected to" another component (e.g., a second component), it is to be understood that the one component may be directly coupled with/to the other component or may be coupled with/to the other component via another component (e.g., a third component).

On the other hand, when it is mentioned that a component (e.g., a first component) is "directly coupled with/to" or "directly connected to" another element (e.g., a second component), it is to be understood that there is no other component (e.g., a third component) between one component and the other component.

According to the situation, the expression "configured to" used herein may be used as, for example, the expression "suitable for", "having the capacity to", "designed to", "adapted to", "made to", or "capable of". The term "configured to" must not mean only "specifically designed to" in hardware.

Instead, the expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

The terms, such as "module", "unit", "part", etc. herein should be understood as a unit that processes at least one function or operation and that may be embodied in a hardware manner, a software manner, or a combination of the hardware manner and the software manner. Also, a plurality of "modules", "units", "parts", etc. may be integrated into at least one module or chip and implemented as at least one processor, except that each needs to be implemented in individual specific hardware.

Meanwhile, various elements and areas in the drawings are drawn schematically. Accordingly, the technical idea of the disclosure is not limited by the relative sizes or distances drawn in the attached drawings.

Hereinafter, with reference to the attached drawings, embodiments according to the disclosure will be described in detail so as to be easily implemented by one of ordinary in the art.

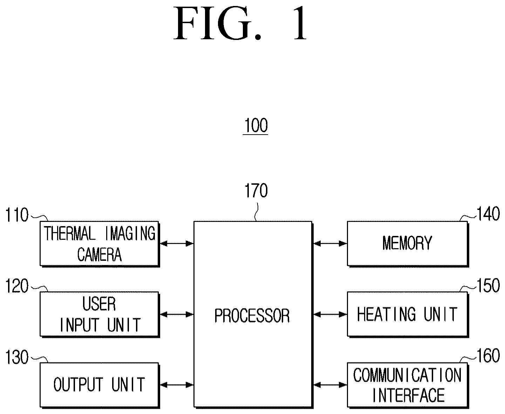

FIG. 1 is a block diagram showing the configuration of a cooking apparatus according to an embodiment of the disclosure. As shown in FIG. 1, a cooking apparatus 100 may include a thermal imaging camera 110, a user input unit 120, an output unit 130, a memory 140, a heating unit 150, a communication interface 160, and a processor 170. On the other hand, the cooking apparatus 100, which is an apparatus that cooks food by using at least one heat source, may be an oven such as a gas oven or an electric oven, a microwave heating device (hereinafter referred to as a microwave), or an air fryer, but is not limited thereto. Meanwhile, the configuration shown in FIG. 1 is merely an embodiment, and some configurations may be further included according to the type of the cooking apparatus 100.

The thermal imaging camera 110 is a configuration of obtaining a thermal image by visualizing infrared rays (or heating wires) emitted by a subject. The thermal image obtained by the thermal imaging camera 110 may include information about the temperature of the subject. That is, pixel information included in the thermal image may represent the information about the temperature of the subject. In this regard, the thermal imaging camera 110 may be referred to as various terms such as a thermal imaging sensor, a thermal imaging image sensor, etc.

According to an embodiment of the disclosure, the thermal imaging camera 110 may be located at one side of the cooking apparatus 100 (e.g., an upper end of the cooking apparatus 100), and may obtain a thermal image by photographing the inside of the cooking apparatus 100. In this regard, the thermal image may include a plurality of areas. For example, the thermal image may include a cooking food area, a first inner wall area covered by a protective window 210, and a second inner wall area not covered by the protective window 210.

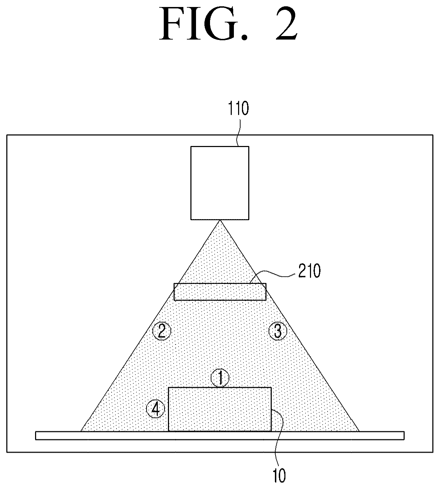

Meanwhile, the thermal imaging camera 110 may be protected from heat or contamination generated inside the cooking apparatus 100 by the protective window 210. Specifically, as shown in FIG. 2, the protective window 210 may be disposed between the thermal imaging camera 110 and a food 10, and may protect the thermal imaging camera 110 from heat or contamination generated inside the cooking apparatus 100.

However, because the protective window 210 exists between the thermal imaging camera 110 and the food 10, when the thermal imaging camera 110 measures the temperature of the food 10, there is a limitation that the temperature of the food 10 may not be accurately measured due to the protective window 210. Specifically, among temperatures inside the cooking apparatus 100, a temperature Tfood of the food 10 obtained through the cooking food area, a temperature Tcavity of the first inner wall covered by the protective window 210, and a temperature Tcavity_raw of the second inner wall not covered by the protective window 210 may be as shown in Equation 1 below.

[Equation 1]

$$T_{\{food\}} = f\left(\alpha \cdot E_{\{food\}} + (1 - \alpha) \cdot E_{\{glass\}}\right)$$

$$T_{\{cavity\}} = f\left(\alpha \cdot E_{\{cavity\_raw\}} + (1 - \alpha) \cdot E_{\{glass\}}\right)$$

$$T_{\{cavity\_raw\}} = f\left(E_{\{cavity\_raw\}}\right)$$

In this regard, E denotes thermal (or infrared) energy, and $\alpha$ may denote a proportional constant.

Because the temperature Tfood of the food 10 is also influenced by the thermal energy of the protective window 210 as shown in Equation 1 above, it is necessary to correct the influence of the protective window 210 in order to accurately calculate the temperature Tfood of the food 10.

Accordingly, according to an embodiment of the disclosure, the processor 170 may calculate a correction parameter by the protective window 210 and correct the temperature of the food 10 based on the correction parameter.

In particular, the protective window 210 may be asymmetrically disposed with respect to the thermal imaging camera 110 as shown in FIG. 2 so as to cover a part ② and not cover a remaining part ③ of an inner wall of the cooking apparatus 100 within a photographing range of the thermal imaging camera 1100. Accordingly, the processor 170 may calculate the correction parameter by the protective window 210 based on a temperature difference between the first inner wall area covered by the protective window 210 and the second inner wall area not covered by the protective window 210. On the other hand, it is described in the above-described embodiment that the protective window 210 is asymmetrically disposed with respect to the thermal imaging camera 110, but this is merely an embodiment, and the shape of the protective window 210 may be asymmetrical so as to cover the part ② and not cover the remaining part ③ of the inner wall of the cooking apparatus 100.

According to an embodiment of the disclosure, in order to directly measure the temperature of the protective window 210, a thermally conductive material may be coated or a thermistor may be disposed on an area of the protective window 210.

The user input unit 120 includes a circuit, and the processor 170 may receive a user input for controlling an operation of the cooking apparatus 100 through the user input unit 120. For example, the user input unit 120 may be implemented in the form of a dial on one side of a front surface of the cooking apparatus 100. However, this is merely an embodiment, and the user input unit 120 may be a configuration such as a button, a touch screen, or a signal receiving unit for receiving a user input from an external device.

In particular, the user input unit 120 may receive a user input for controlling a cooking operation of the cooking apparatus 100, and may receive a user input for changing the setting of the thermal imaging camera 110.

The output unit 130 includes a circuit, and the processor 170 may output various functions that may be performed by the cooking apparatus 100 through the output unit 130. For example, the output unit 130 may be implemented in the form of a display on one side of the front surface of the cooking apparatus 100. However, this is merely an embodiment, and the output unit 130 may further include an indicator or a speaker.

The output unit 130 may output a message indicating a cooking state of the cooking apparatus 100, and may output a message including information about the temperature of the food 10 placed inside the cooking apparatus 100.

The memory 140 may store at least one instruction for controlling the cooking apparatus 100. Also, an operating system (O/S) for driving the cooking apparatus 100 may be stored in the memory 140. In addition, various software programs or applications for operating the cooking apparatus 100 according to various embodiments of the disclosure may be stored in the memory 140. Also, the memory 140 may include a semiconductor memory such as a flash memory or a magnetic storage medium such as a hard disk.

In particular, the memory 140 may include a plurality of modules for correcting the temperature of the food 10 according to the influence of the protective window 210. In particular, when the cooking apparatus 100 is powered on or a function of correcting the temperature of the food 10 is executed according to the influence of the protective window 210, the cooking apparatus 100 may load data for various modules stored in a nonvolatile memory to perform various operations into the volatile memory. Here, loading means an operation of fetching and storing the data stored in the nonvolatile memory in the volatile memory so that the processor 170 may access the data.

The heating unit 150 is a component that applies heat to the food 10 placed inside the cooking apparatus 100. In this regard, the heating unit 150 may include at least one heat source such as a heating wire or a microwave radiation unit. The heating wire is a component that applies heat to the inside of the cooking apparatus 100. In particular, the heating wire may be located on at least one of a ceiling surface inside the cooking apparatus 100, a rear surface inside the cooking apparatus 100, and the side surface inside the cooking apparatus 100. In particular, when the cooking apparatus 100 operates in one of an air fryer mode, a grill mode, and an oven mode among a plurality of driving modes, the processor 170 may perform a cooking operation by controlling a heating wire corresponding to a driving mode. The microwave radiation unit may generate microwaves of a certain frequency and then emit the generated microwaves into the cooking apparatus 100. In particular, when the cooking apparatus 100 operates in a range mode among the driving modes or the cooking apparatus 100 is implemented in a microwave, the processor 170 may perform the cooking operation by controlling the microwave radiation unit.

The communication interface 160 includes a circuit, and may communicate with an external device (e.g., a user terminal or an external server). Specifically, the processor 170 may receive various data or information from an external device connected through the communication interface 160 and transmit the various data or information to the external device.

The communication interface 160 may include at least one of a WiFi module, a Bluetooth module, a wireless communication module, an NFC module, or an Ultra WideBand. In this regard, the wireless communication module may perform communication according to various communication standards such as IEEE, Zigbee, 3rd Generation (3G), 3rd Generation Partnership Project (3GPP), Long Term Evolution (LTE), or 5th Generation (5G).

The communication interface 160 may receive a user command for setting the driving mode of the cooking apparatus 100 or a user command for controlling the cooking operation from the external device, and transmit information about a current cooking state to the external device.

The processor 170 may control general operations of the cooking apparatus 100 according to the at least one instruction stored in the memory 140. Specifically, the processor 170 may obtain a thermal image through the thermal imaging camera 110. The processor 170 may divide the thermal image into the cooking food area including the food 10, the first inner wall area covered by the protective window 210, and the second inner wall area not covered by the protective window 210. The processor 170 may obtain the correction parameter by the protective window 210 based on the first inner wall area and the second inner wall area. The processor 170 may correct the temperature of the food 10 obtained through the cooking food area based on the correction parameter.

In an embodiment, the processor 170 may identify information about a difference between a first temperature obtained through the first inner wall area and a second temperature obtained through the second inner wall area. The processor 170 may obtain a correction parameter corresponding to the information about the difference between the first temperature and the second temperature. In this regard, the larger the difference between the first temperature and the second temperature, the greater the correction parameter, and the less the difference between the first temperature and the second temperature, the less the correction parameter.

In an embodiment, when a first preset event related to a temperature change with respect to at least one of a plurality of areas included in the thermal image occurs, the processor 170 may update the correction parameter. The first preset event may include an event in which a temperature change obtained through the first inner wall area or the second inner wall area rises or falls more than a preset value or an event in which a change in the difference between the first temperature obtained through the first inner wall area and the second temperature obtained through the second inner wall area is equal to or greater than the preset value.

In an embodiment, when a second preset event in which the setting related to the thermal imaging camera 110 is changed occurs, the processor 170 may update the correction parameter.

In an embodiment, the processor 170 may update the correction parameter every preset period.

In an embodiment, when a thermally conductive material is coated on an area of the protective window 210, the processor 170 may obtain the information about the temperature of the protective window 210 through an area of the thermal image corresponding to the area. The processor 170 may obtain a correction parameter by the protective window 210 based on the information about the temperature of the protective window 210. The processor 170 may correct the temperature of the food 10 obtained through the cooking food area based on the correction parameter.

In an embodiment, when a thermistor is attached to an area of the protective window 210, the processor 170 may obtain the information about the temperature of the protective window 210 through the thermistor. The processor 170 may obtain a correction parameter by the protective window 210 based on the information about the temperature of the protective window 210. The processor 170 may correct the temperature of the food 10 obtained through the cooking food area based on the correction parameter.

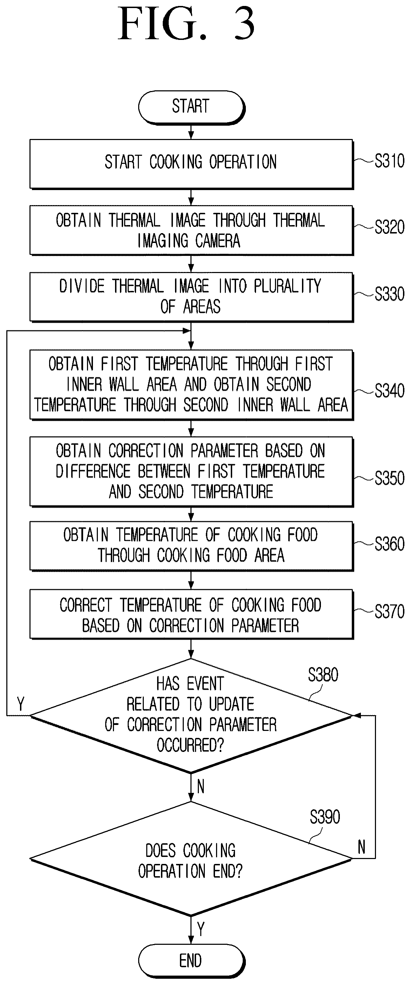

FIG. 3 is a flowchart for explaining a method of correcting the temperature of food according to the influence of a protective window according to an embodiment of the disclosure.

First, the cooking apparatus 100 may start a cooking operation (S310). In this regard, the cooking apparatus 100 may start the cooking operation based on a user input that is input through the user input unit 120 or a user input that is received through the communication interface 160. In this regard, the cooking apparatus 100 may start the cooking operation based on a user input for setting information related to the cooking operation, such as a cooking mode, a cooking time, or a cooking temperature. Meanwhile, when the cooking operation starts, a food may be disposed in the cooking apparatus 100.

The cooking apparatus 100 may obtain a thermal image through the thermal imaging camera 110 (S320). In this regard, the thermal image is an image of inside the cooking apparatus 100 obtained through the thermal imaging camera 110, and pixels of the thermal image may represent the internal temperature of the cooking apparatus 100. In this regard, the thermal imaging camera 110 may be located on an upper side inside the cooking apparatus 100, but this is merely an embodiment, and the thermal imaging camera 110 may be located on a side surface or a rear surface inside the cooking apparatus 100. In this regard, the cooking apparatus 100 may continuously obtain frames of the thermal image through the thermal imaging camera 110 as the background while performing the following operation, and may store the obtained frames of the thermal image in a buffer.

The cooking apparatus 100 may divide the thermal image into a plurality of areas (S330). Specifically, the cooking apparatus 100 may divide the thermal image into a cooking food area including food, a first inner wall area covered by the protective window 210, and a second inner wall area not covered by the protective window 210. In this regard, the cooking food area may be an area located within an area photographed through an observation window located in front of the thermal imaging camera 110 to measure the temperature of the food, but may be referred to as an observation area. The first inner wall area may be an inner wall area covered by the protective window 210 among inner wall areas other than the cooking food area. The second inner wall area may be an inner wall area that is not covered by the protective window 210 among the inner wall areas other than the cooking food area.

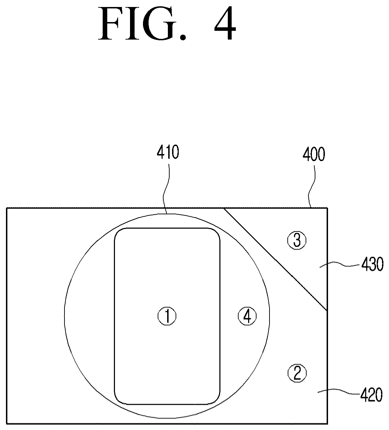

As an embodiment of the disclosure, the cooking apparatus 100 may obtain a thermal image 400 as shown in FIG. 4. The thermal image 400 may include a cooking food area 410, a first inner wall area 420, and a second inner wall area 430. The cooking food area 410 may include an area ① corresponding to the food and a background area ④. The first inner wall area 420 may be an area ② corresponding to an inner wall that is covered by the protective window 210 among the inner wall areas other than the cooking food area 410. The second inner wall area 430 may be an area ③ corresponding to an inner wall of an upper right end that is not covered by the protective window 210 among the inner wall areas other than the cooking food area 410. For reference, in FIGS. 4 to 8, only lines for dividing the plurality of areas in the thermal image 400 are disclosed, and pixel expressions indicating the temperature of each of the plurality of areas are omitted.

The cooking apparatus 100 may obtain a first temperature through the first inner wall area and obtain a second temperature through the second inner wall area (S340). Specifically, the cooking apparatus 100 may obtain the first temperature based on a representative value (e.g., an average value, a mode value, or a median value) of pixels in the first inner wall area of the thermal image, and obtain the second temperature based on a representative value of pixels in the second inner wall area of the thermal image. In this regard, the first temperature may be a temperature of an inner wall of the inside the cooking apparatus 100 covered by the protective window 210, and the second temperature may be a temperature of an inner wall of the inside the cooking apparatus 100 not covered by the protective window 210. In an embodiment, the cooking apparatus 100 may obtain the second temperature through pixels of an area of the second inner wall area near the first inner wall area.

The cooking apparatus 100 may obtain a correction parameter based on a difference between the first temperature and the second temperature (S350). Specifically, the cooking apparatus 100 may obtain the correction parameter by the protective window 210 by calculating the difference between the first temperature and the second temperature. In this regard, the correction parameter, which is a parameter for correcting the temperature of the food obtained through the cooking food area of the thermal image, may be a correction value multiplied by the temperature of the food obtained through the cooking food area of the thermal image. However, this is merely an embodiment, and the correction parameter may be the correction value added to the temperature of the food obtained through the cooking food area of the thermal image.

In particular, the greater the difference between the first temperature and the second temperature, the greater the correction parameter, and the less the difference between the first temperature and the second temperature, the less the correction parameter. That is, the greater the difference between the first temperature and the second temperature, the greater the influence of the protective window 210 may be determined, so that the correction parameter may be great, and the less the difference between the first temperature and the second temperature, the smaller the influence of the protective window 210 may be determined, so that the correction parameter may be small. In this regard, the correction parameter corresponding to the difference between the first temperature and the second temperature may be stored in the memory 140, but the disclosure is not limited thereto, and the correction parameter may be calculated according to the difference between the first temperature and the second temperature.

The cooking apparatus 100 may obtain the temperature of the food through the cooking food area (S360). Specifically, as shown in FIG. 4, the cooking apparatus 100 may separate the area ① corresponding to the food from the cooking food area 410. Also, the cooking apparatus 100 may obtain the temperature of the food based on the representative value of the pixels included in the area ① corresponding to the food. In this regard, the obtained temperature of the food may be a temperature distorted by the influence of the protective window 210. Meanwhile, it is described that operation S360 is performed after operation S350, but this is merely an embodiment, and operation S360 may be performed after operation S330 and before operation S350.

The cooking apparatus 100 may correct the temperature of the food based on the correction parameter (S370). In an embodiment, the cooking apparatus 100 may correct the temperature of the food by multiplying the correction parameter obtained in operation S350 by the temperature of the food obtained in operation S360. In this regard, when the correction parameter is greater than 1, the cooking apparatus 100 may correct the food temperature to increase the food temperature obtained in operation S360. Alternatively, when the correction parameter is greater than 0 and less than 1, the cooking apparatus 100 may correct may correct the food temperature to decrease the food temperature obtained in operation S360.. However, this is merely an embodiment, and the cooking apparatus 100 may correct the temperature of the food by adding the correction parameter obtained in operation S350 to the temperature of the food obtained in operation S360.

The cooking apparatus 100 may control the cooking operation based on the corrected temperature of the food. For example, the cooking apparatus 100 may perform a next cooking operation, change the cooking temperature, or end the cooking operation based on the corrected temperature of the food.

The cooking apparatus 100 may identify whether an event related to the update of the correction parameter has occurred (S380). Specifically, when the cooking apparatus 100 calculates a correction parameter for each frame of the thermal image, the cooking apparatus 100 may more accurately correct the temperature of the food, but there may be a limit in which the amount of calculation increases. Therefore, when the event related to the update of the correction parameter has occurred (S380-Y), the cooking apparatus 100 may perform an operation after operation S340 on frames of a new thermal image again to update the correction parameter.

In an embodiment, the event related to the update of the correction parameter may be a first preset event related to a temperature change for at least one of a plurality of areas included in the thermal image. In this regard, the first preset event may include an event in which a temperature change obtained through the first inner wall area or the second inner wall area rises or falls more than a preset value or an event in which a change in the difference between the first temperature obtained through the first inner wall area and the second temperature obtained through the second inner wall area is equal to or greater than the preset value. Specifically, when a difference between the temperature of the first inner wall area or the second inner wall area obtained from a current frame and the temperature of the first inner wall area or the second inner wall area obtained from a previous frame is greater than or equal to the preset value, the cooking apparatus 100 may update the correction parameter to reflect a sharp increase in the temperature of the inner wall, a temperature change of the protective window 210, or an environmental change due to moisture. Alternatively, when a difference between a first difference value between the first temperature and the second temperature obtained in the current frame and a second difference value between the first temperature and the second temperature obtained in the previous frame is greater than or equal to the preset value, the cooking apparatus 100 may update the correction parameter to reflect a change in the characteristics of the protective window 210.

In an embodiment, the event related to the update of the correction parameter may be a second preset event in which the setting related to the thermal imaging camera 110 is changed. Specifically, when the sensitivity, emissivity, frame per second (FPS), a rolling average range, etc. of the thermal imaging camera 110 are changed, the cooking apparatus 100 may update the correction parameter. Meanwhile, a second preset event may occur while the cooking operation is performed, but this is only an embodiment, and the second preset event may occur before the cooking operation is performed.

In an embodiment, the event related to the update of the correction parameter may be an event at which a preset period arrives. That is, the cooking apparatus 100 may update the correction parameter every preset period (e.g., 10 seconds).

When the event related to the update of the correction parameter has not occurred (S380-N), the cooking apparatus 100 may determine whether to end the cooking operation (S390). For example, the cooking apparatus 100 may determine whether to end the cooking operation based on whether a preset cooking time has arrived, and may determine whether to end the cooking operation based on the corrected temperature of the food.

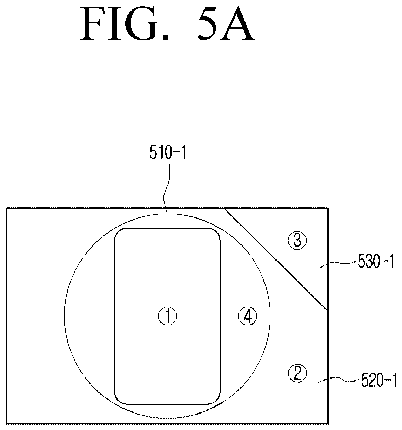

Meanwhile, according to an embodiment of the disclosure, the shape of the observation window (or observation area) may be different according to a type of the cooking apparatus 100. This will be described with reference to FIGS. 5A to 6C.

In an embodiment, when the type of the cooking apparatus 100 is a turn table type, the observation window may have a circular shape. When the observation window has the circular shape, each of observation areas (or cooking food areas) 510-1, 510-2, and 510-3 of the thermal image may also have the circular shape, as shown in FIGS. 5A to 5C. That is, in the case of the turn table type cooking apparatus 100, because the turn table rotates, the observation window may have the circular shape to prevent the observation area from changing according to the rotation of the turn table.

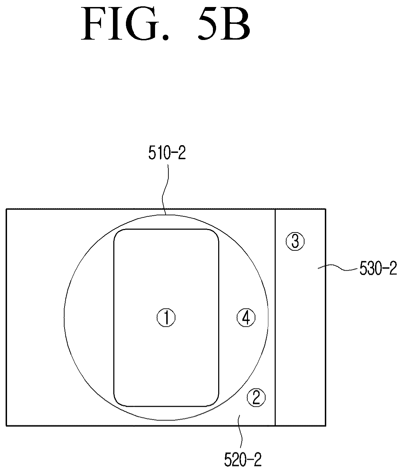

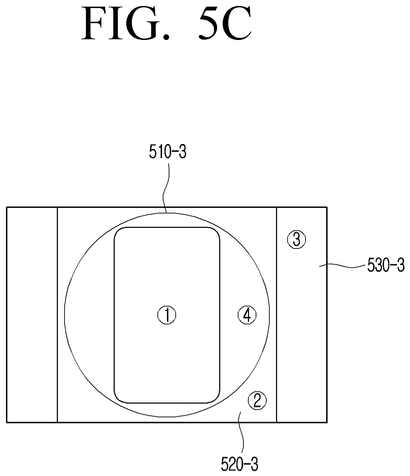

Meanwhile, when the type of the cooking apparatus 100 is the turn table type, the cooking apparatus 100 may obtain a thermal image including first inner wall areas 520-1, 520-2, and 520-3 and second inner wall areas 530-1, 530-2, and 530-3 in various shapes as shown in FIGS. 5A to 5C. For example, the cooking apparatus 100 may obtain a thermal image including the second inner wall area 530-1 located in an upper right corner as shown in FIG. 5A, a thermal image including the second inner wall area 530-2 located in a right area as shown in FIG. 5B, and a thermal image including the second inner wall area 530-3 located in right and left areas, as shown in FIG. 5C.

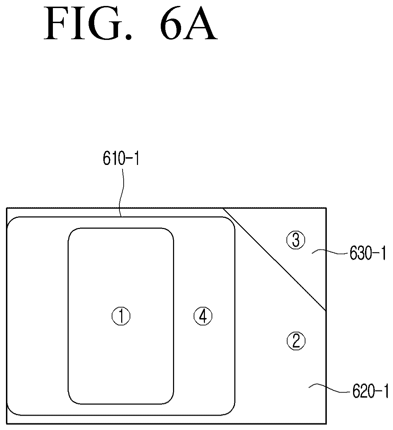

In an embodiment, when the type of the cooking apparatus 100 is a flat-bed type, the observation window may have a rectangular shape. When the observation window has the rectangular shape, each of observation areas (or cooking food areas) 610-1, 610-2, and 610-3 of the thermal image may also have the rectangular shape, as shown in FIGS. 6A to 6C. That is, in the case of the flat-bed type cooking apparatus 100, the table does not rotate, but the food may be located in various areas under the cooking apparatus 100, and thus, the flat-bed type cooking apparatus 100 may include the observation area in the rectangular shape larger than that of the observation area of the turn table type cooking apparatus 100.

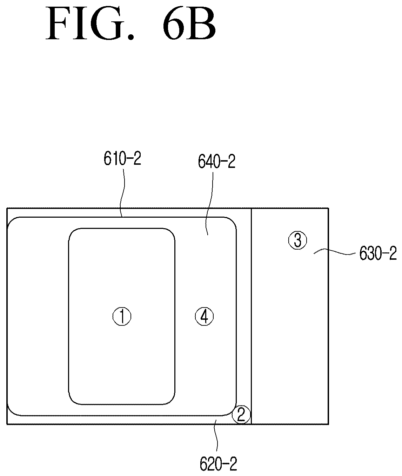

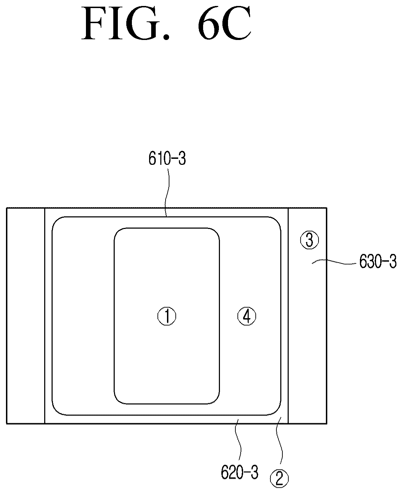

Meanwhile, when the type of the cooking apparatus 100 is the flat-bed method, the cooking apparatus 100 may obtain a thermal image including first inner wall areas 620-1, 620-2, and 620-3 and second inner wall areas 630-1, 630-2, and 630-3 in various shapes as shown in FIGS. 6A to 6C. For example, the cooking apparatus 100 may obtain a thermal image including the second inner wall area 630-1 located in the upper right corner, as shown in FIG. 6A, obtain a thermal image including the second inner wall area 630-2 located in the right area as shown in FIG. 6B, and obtain a thermal image including the second inner wall area 630-3 located in the right and left areas, as shown in FIG. 6C.

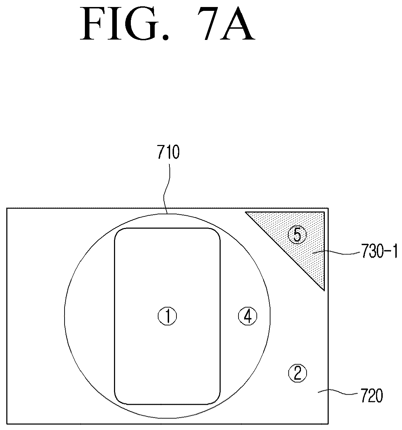

According to an embodiment of the disclosure, the cooking apparatus 100 may correct the temperature of the food obtained through the thermal image by directly measuring the temperature of the protective window 210. This will be described with reference to FIGS. 7A to 9. Meanwhile, FIGS. 7A to 8 show thermal images, and thermal conductive materials 730-1, 730-2, 730-3, and 730-4 or a thermistor 830 shown in FIGS. 7A to 8 may be photographed by the thermal imaging camera 110.

In an embodiment, the cooking apparatus 100 may coat a thermally conductive material having high thermal conductivity on the protective window 210 in order to directly measure the temperature of the protective window 210. For example, the thermally conductive material having high thermal conductivity, such as silver or copper, may be coated on the protective window 210.

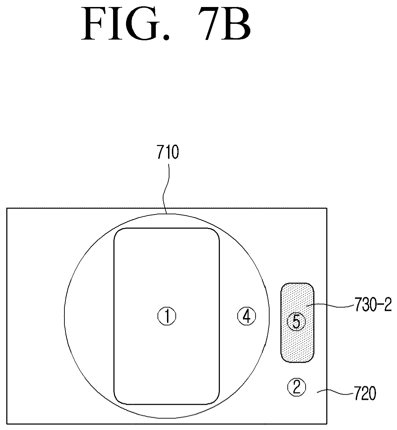

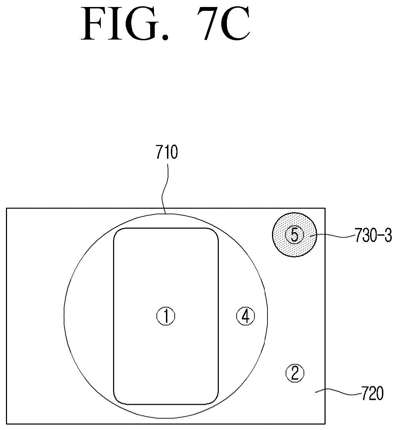

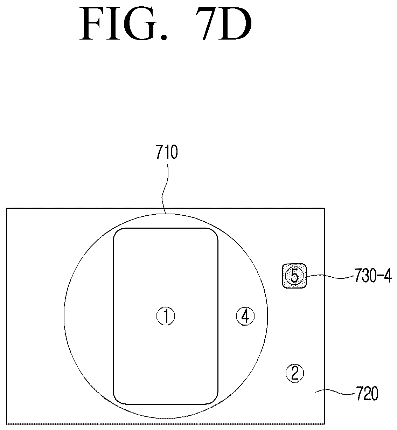

In this regard, a thermally conductive material ⑤ may be coated on the remaining area of the protective window 210 except for a cooking food area (or an observation area). In an embodiment, as shown in FIG. 7A, the thermally conductive material 730-1 may be coated in a triangular shape on a right upper corner of a remaining area 720 of the protective window 210 except for a cooking food area 710. In an embodiment, as shown in FIG. 7B, the thermally conductive material 730-2 may be coated in a rectangular shape on a right side of the remaining area 720 of the protective window 210 except for the cooking food area 710. In an embodiment, as shown in FIG. 7C, the thermally conductive material 730-3 may be coated in a circular shape on the right upper corner of the remaining area 720 of the protective window 210 except for the cooking food area 710. In an embodiment, as shown in FIG. 7D, the thermally conductive material 730-4 may be coated in a square shape on the right side of the remaining area 720 of the protective window 210 except for the cooking food area 710.

The cooking apparatus 100 may directly measure the temperature of the protective window 210 by measuring the temperature by using an area of the thermal image coated with a thermal conductive material.

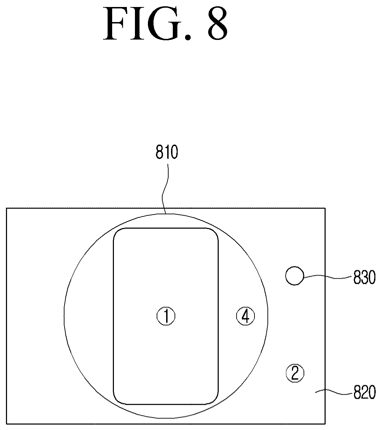

In an embodiment, the cooking apparatus 100 may include the protective window 210 to which a thermistor is attached in order to directly measure the temperature of the protective window 210. In this regard, the thermistor is a type of resistor, and is a configuration capable of measuring a temperature by using a property in which a resistance of a material changes according to a temperature. For example, as shown in FIG. 8, the thermistor 830 may be attached onto a right area of a remaining area 820 of the protective window 210 except for a cooking food area 810.

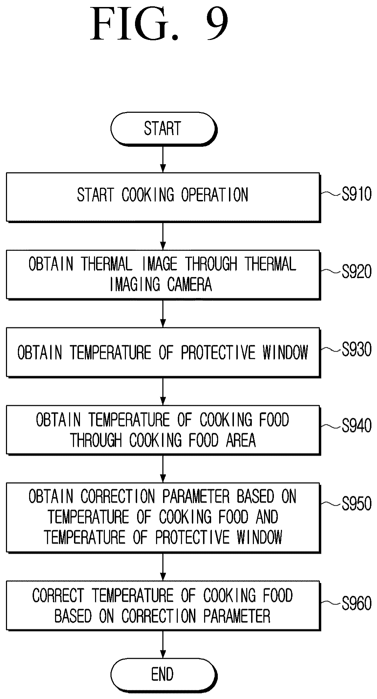

FIG. 9 is a flowchart for explaining a method of correcting the temperature of food by measuring the temperature of a protective window according to an embodiment of the disclosure.

First, the cooking apparatus 100 may start a cooking operation (S910). In this regard, the cooking apparatus 100 may start the cooking operation based on a user input that is input through the user input unit 120 or a user input that is received through the communication interface 160. In this regard, the cooking apparatus 100 may start the cooking operation based on a user input for setting information related to the cooking operation, such as a cooking mode, a cooking time, or a cooking temperature. Meanwhile, when the cooking operation starts, a food may be disposed in the cooking apparatus 100.

The cooking apparatus 100 may obtain a thermal image through the thermal imaging camera 110 (S920). In this regard, the thermal image is an image of inside the cooking apparatus 100 obtained through the thermal imaging camera 110, and pixels of the thermal image may represent the internal temperature of the cooking apparatus 100. In this regard, the cooking apparatus 100 may continuously obtain frames of the thermal image through the thermal imaging camera 110 as the background while performing the following operation, and may store the obtained frames of the thermal image in a buffer.

The cooking apparatus 100 may obtain the temperature of the protective window (S930). Specifically, the cooking apparatus 100 may obtain the temperature of the protective window 210 based on the thermal conductive materials 730-1, 730-2, 730-3, and 730-4 coated on the protective window as described with reference to FIGS. 7A to 7D, and may obtain the temperature of the protective window based on the thermistor 830 described with reference to FIG. 8.

The cooking apparatus 100 may obtain the temperature of the food through a cooking food area (S940). Specifically, the cooking apparatus 100 may separate the area ① corresponding to the food from the cooking food area. Also, the cooking apparatus 100 may obtain the temperature of the food based on a representative value of pixels included in the area ① corresponding to the food.

The cooking apparatus 100 may obtain a correction parameter based on the temperature of the food and the temperature of the protective window (S950). Specifically, when the temperature of the protective window is identified to be higher than the temperature of the food, the cooking apparatus 100 may obtain a correction parameter for lowering the temperature of the food, and when the temperature of the protective window is identified to be lower than the temperature of the food, the cooking apparatus 100 may obtain a correction parameter for increasing the temperature of the food. In this regard, the greater the difference between the temperature of the protective window and the temperature of the food, the greater the absolute value of the correction parameter, and the less the difference between the temperature of the protective window and the temperature of the food, the less the absolute value of the correction parameter.

The cooking apparatus 100 may correct the temperature of the food based on the correction parameter (S960). In an embodiment, the cooking apparatus 100 may correct the temperature of the food by multiplying the correction parameter obtained in operation S950 by the temperature of the food obtained in operation S940. In this regard, when the correction parameter is greater than 1, the cooking apparatus 100 may correct the food temperature to increase the food temperature obtained in operation S940. Alternatively, when the correction parameter is greater than 0 and less than 1, the cooking apparatus 100 may correct the food temperature to decrease the food temperature obtained in operation S360.. However, this is merely an embodiment, and the cooking apparatus 100 may correct the temperature of the food by adding the correction parameter (in this regard, the correction parameter includes a positive number and a negative number) obtained in operation S950 to the temperature of the food obtained in operation S940.

Meanwhile, although not shown in FIG. 9, the correction parameter may also be updated when an event for updating the correction parameter is detected in the embodiment of FIG. 9 as described in operation S380 of FIG. 3.

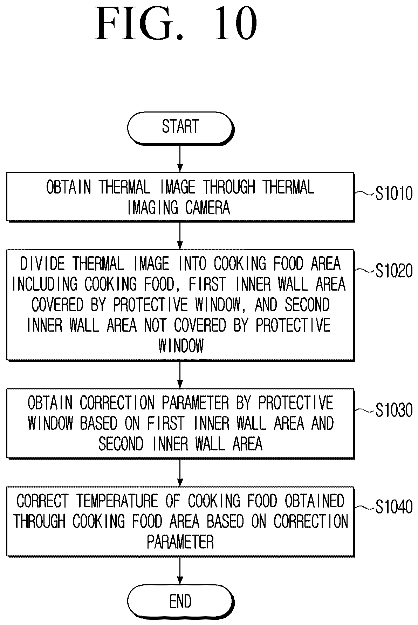

FIG. 10 is a flowchart for explaining a method of controlling a cooking apparatus according to an embodiment of the disclosure.

The cooking apparatus 100 may obtain a thermal image through a thermal imaging camera (S1010). Specifically, the cooking apparatus 100 may obtain a thermal imaging area including a food through the thermal imaging camera 110 located in an area inside the cooking apparatus 100. In this regard, the thermal imaging camera 110 may be protected by the protective window 210. The protective window 210 may be asymmetrically disposed with respect to the thermal imaging camera 110 so as to cover a part and not cover a remaining part of an inner wall of the cooking apparatus 100 within a photographing range of the thermal imaging camera 110.

The cooking apparatus 100 may divide the thermal image into a cooking food area including the food, a first inner wall area covered by the protective window 210, and a second inner wall area not covered by the protective window 210.

The cooking apparatus 100 may obtain a correction parameter by the protective window 210 based on the first inner wall area and the second inner wall area (S1030). Specifically, the cooking apparatus 100 may identify information about a difference between a first temperature obtained through the first inner wall area and a second temperature obtained through the second inner wall area. Also, the cooking apparatus 100 may obtain a correction parameter corresponding to the information about the difference between the first temperature and the second temperature. In this regard, the greater the difference between the first temperature and the second temperature, the greater the correction parameter, and the less the difference between the first temperature and the second temperature, the less the correction parameter.

The cooking apparatus 100 may correct the temperature of the food obtained through the cooking food area based on the correction parameter (S1040).

In an embodiment, when a first preset event related to a temperature change for at least one of a plurality of areas included in the thermal image occurs, the cooking apparatus 100 may update the correction parameter. In this regard, the first preset event may include an event in which a temperature change obtained through the first inner wall area or the second inner wall area rises or falls more than a preset value or an event in which a change in the difference between the first temperature obtained through the first inner wall area and the second temperature obtained through the second inner wall area is equal to or greater than the preset value.

In an embodiment, when a second preset event in which the setting related to the thermal imaging camera 110 is changed occurs, the cooking apparatus 100 may update the correction parameter.

In an embodiment, the cooking apparatus 100 may update the correction parameter every preset period.

Meanwhile, the cooking apparatus 100 may obtain a correction parameter by directly measuring the temperature of the protective window 210. In an embodiment, a thermally conductive material may be coated on an area of the protective window 210. The cooking apparatus 100 may obtain information about the temperature of the protective window 210 through an area of the thermal image corresponding to the area. The cooking apparatus 100 may obtain the correction parameter by the protective window 210 based on the information about the temperature of the protective window 10.

In an embodiment, a thermistor may be attached onto an area of the protective window 210. The cooking apparatus 100 may obtain information about the temperature of the protective window 210 through the thermistor. The cooking apparatus 100 may obtain the correction parameter by the protective window 210 based on the information about the temperature of the protective window 10.

Meanwhile, the method according to various embodiments herein may be provided in a computer program product. The computer program product may be traded between a seller and a purchaser as a commodity. The computer program product may be distributed in the form of a machine-readable storage medium (e.g., compact disc read only memory (CD-ROM)) or may be directly or online distributed (e.g., download or upload) through an application store (e.g., Google Play Store™) or between two user devices (e.g., smartphones). In case of electronic distribution, at least a part of the computer program product (e.g., downloadable app) may be stored or created temporarily on a storage medium such as memory of a server of a manufacturer, a server of an application store, or a relay server.

Various embodiments of the disclosure may be implemented in software that includes instructions that may be stored in machine (e.g., computer)-readable storage media. Machine is an apparatus capable of calling stored instructions from a storage medium and operating according to the called instructions, and may include a cooking apparatus of the embodiments.

Meanwhile, the machine-readable storage media may be provided in the form of non-transitory storage media. Here, 'non-temporary storage media' are tangible devices and means that do not include a signal (e.g., electromagnetic waves), but do not distinguish whether data is stored semi-permanently or temporarily on the storage media. For example, the 'non-temporary' may include a buffer that temporarily stores data.

When the instructions are executed by a processor, the processor may perform a function corresponding to the instructions directly or by using other elements under the control of the processor. The instructions may include code generated or executed by a compiler or an interpreter.

Although the exemplary embodiments of the disclosure have been illustrated and described hereinabove, the disclosure is not limited to the abovementioned specific exemplary embodiments, but may be variously modified by those skilled in the art to which the disclosure pertains without departing from the scope and spirit of the disclosure as disclosed in the accompanying claims. These modifications should also be understood to fall within the scope of the disclosure.

**Claims**

1. A cooking apparatus comprising:

a thermal imaging camera configured to measure a temperature of food;
a protective window, between the thermal imaging camera and the food, configured to protect the thermal imaging camera; and
a processor configured to obtain a thermal image through the thermal imaging camera,

divide the thermal image into a cooking food area comprising the food, a first inner wall area covered by the protective window, and a second inner wall area not covered by the protective window other than the cooking food area,
obtain a correction parameter to correct influence by the protective window on measurement obtained through the thermal imaging camera based on information obtained for the first inner wall area and the second inner wall area of the thermal image, and
correct the temperature of the food measured by the thermal imaging camera through the cooking food area based on the correction parameter.

2. The cooking apparatus of claim 1, wherein the processor is configured to:

identify information about a difference between a first temperature obtained through the first inner wall area and a second temperature obtained through the second inner wall area, and
obtain the correction parameter corresponding to the information about the difference between the first temperature and the second temperature.

3. The cooking apparatus of claim 2, wherein the correction parameter is greater based on a difference between the first temperature and the second temperature being greater than when the difference between the first temperature and the second temperature is less.

4. The cooking apparatus of claim 1, wherein the protective window is asymmetrical with respect to the thermal imaging camera such as to cover a part of an inner wall of the cooking apparatus and not cover a remaining part of the inner wall of the cooking apparatus within a photographing range of the thermal imaging camera.

5. The cooking apparatus of claim 1, wherein the processor is configured to update the correction parameter based on a preset event related to a temperature change for at least one of a plurality of areas included in the thermal image occurring.

6. The cooking apparatus of claim 5, wherein the preset event is a first preset event including an event in which a temperature change obtained through the first inner wall area or the second inner wall area rises or falls more than a preset value, or an event in which a change in a difference between a first temperature obtained through the first inner wall area and a second temperature obtained through the second inner wall area is greater than or equal to the preset value.

7. The cooking apparatus of claim 1, wherein the processor is configured to update the correction parameter based on a preset event in which a setting related to the thermal imaging camera is changed occurs.

8. The cooking apparatus of claim 1, wherein the processor is configured to update the correction parameter every preset period.

9. The cooking apparatus of claim 1, wherein a thermally conductive material is coated on an area of the protective window, and
the processor is configured to:

obtain information about a temperature of the protective window through an area of the thermal image corresponding to the area of the protective window coated,
obtain a correction parameter by the protective window based on the information about the temperature of the protective window, and
correct the temperature of the food obtained through the cooking food area based on the correction parameter.

10. The cooking apparatus of claim 1, wherein a thermistor is attached onto an area of the protective window, and the processor is configured to:

>obtain information about the temperature of the protective window through the thermistor,
>obtain a correction parameter by the protective window based on the information about the temperature of the protective window, and
>correct the temperature of the food obtained through the cooking food area based on the correction parameter.

11. A method of controlling a cooking apparatus comprising a thermal imaging camera configured to measure a temperature of food and a protective window, between the thermal imaging camera and the food, configured to protect the thermal imaging camera, the method comprising:

>obtaining a thermal image through the thermal imaging camera;
>dividing the thermal image into a cooking food area comprising the food, a first inner wall area covered by the protective window, and a second inner wall area not covered by the protective window other than the cooking food area;
>obtaining a correction parameter to correct influence by the protective window on measurement obtained through the thermal imaging camera based on information obtained for the first inner wall area and the second inner wall area of the thermal image; and
>correcting the temperature of the food measured by the thermal imaging camera through the cooking food area based on the correction parameter.

12. The method of claim 11, wherein the obtaining of the correction parameter includes

>identifying information about a difference between a first temperature obtained through the first inner wall area and a second temperature obtained through the second inner wall area, and
>obtaining the correction parameter corresponding to the information about the difference between the first temperature and the second temperature.

13. The method of claim 12, wherein the correction parameter is greater based on a difference between the first temperature and the second temperature being greater than when the difference between the first temperature and the second temperature is less.

14. The method of claim 11, wherein the protective window is asymmetrical with respect to the thermal imaging camera such as to cover a part of an inner wall of the cooking apparatus and not to cover a remaining part of the inner wall of the cooking apparatus within a photographing range of the thermal imaging camera.

15. The method of claim 11, further comprising:
updating the correction parameter based on a preset event related to a temperature change for at least one of a plurality of areas included in the thermal image occurring.

# FIG. 1

<u>100</u>

# FIG. 2

# FIG. 3

START

START COOKING OPERATION — S310

OBTAIN THERMAL IMAGE THROUGH THERMAL IMAGING CAMERA — S320

DIVIDE THERMAL IMAGE INTO PLURALITY OF AREAS — S330

OBTAIN FIRST TEMPERATURE THROUGH FIRST INNER WALL AREA AND OBTAIN SECOND TEMPERATURE THROUGH SECOND INNER WALL AREA — S340

OBTAIN CORRECTION PARAMETER BASED ON DIFFERENCE BETWEEN FIRST TEMPERATURE AND SECOND TEMPERATURE — S350

OBTAIN TEMPERATURE OF COOKING FOOD THROUGH COOKING FOOD AREA — S360

CORRECT TEMPERATURE OF COOKING FOOD BASED ON CORRECTION PARAMETER — S370

HAS EVENT RELATED TO UPDATE OF CORRECTION PARAMETER OCCURRED? S380
Y

N

DOES COOKING OPERATION END? S390
N

Y

END

# FIG. 4

# FIG. 5A

# FIG. 5B

# FIG. 5C

# FIG. 6A

# FIG. 6B

# FIG. 6C

# FIG. 7A

# FIG. 7B

# FIG. 7C

710

730-3

720

# FIG. 7D

# FIG. 8

# FIG. 9

START

START COOKING OPERATION — S910

OBTAIN THERMAL IMAGE THROUGH THERMAL IMAGING CAMERA — S920

OBTAIN TEMPERATURE OF PROTECTIVE WINDOW — S930

OBTAIN TEMPERATURE OF COOKING FOOD THROUGH COOKING FOOD AREA — S940

OBTAIN CORRECTION PARAMETER BASED ON TEMPERATURE OF COOKING FOOD AND TEMPERATURE OF PROTECTIVE WINDOW — S950

CORRECT TEMPERATURE OF COOKING FOOD BASED ON CORRECTION PARAMETER — S960

END

# FIG. 10

```
┌─────────────┐
│    START    │
└─────────────┘
        │
        ▼
┌──────────────────────────────────────┐
│  OBTAIN THERMAL IMAGE THROUGH THERMAL │ ∼S1010
│          IMAGING CAMERA               │
└──────────────────────────────────────┘
        │
        ▼
┌──────────────────────────────────────┐
│  DIVIDE THERMAL IMAGE INTO COOKING    │ ∼S1020
│  FOOD AREA INCLUDING COOKING FOOD,    │
│  FIRST INNER WALL AREA COVERED BY     │
│  PROTECTIVE WINDOW, AND SECOND        │
│  INNER WALL AREA NOT COVERED BY       │
│  PROTECTIVE WINDOW                    │
└──────────────────────────────────────┘
        │
        ▼
┌──────────────────────────────────────┐
│  OBTAIN CORRECTION PARAMETER BY       │ ∼S1030
│  PROTECTIVE WINDOW BASED ON FIRST     │
│  INNER WALL AREA AND SECOND INNER     │
│  WALL AREA                            │
└──────────────────────────────────────┘
        │
        ▼
┌──────────────────────────────────────┐
│  CORRECT TEMPERATURE OF COOKING FOOD  │ ∼S1040
│  OBTAINED THROUGH COOKING FOOD AREA   │
│  BASED ON CORRECTION PARAMETER        │
└──────────────────────────────────────┘
        │
        ▼
┌─────────────┐
│     END     │
└─────────────┘
```

## INTERNATIONAL SEARCH REPORT

| International application No. |
| --- |
| **PCT/KR2024/016278** |

| A. | CLASSIFICATION OF SUBJECT MATTER |
| --- | --- |

**F24C 7/08**(2006.01)i; **F24C 3/12**(2006.01)i; **H04N 23/57**(2023.01)i; **H04N 7/18**(2006.01)i; **G03B 21/14**(2006.01)i; **G01J 5/48**(2006.01)i; **G01J 5/02**(2006.01)i

According to International Patent Classification (IPC) or to both national classification and IPC

| B. | FIELDS SEARCHED |
| --- | --- |

Minimum documentation searched (classification system followed by classification symbols)

F24C 7/08(2006.01); F24C 15/00(2006.01); F24C 7/04(2006.01); G01J 1/02(2006.01); G01J 1/44(2006.01); G01J 5/10(2006.01); H04N 23/00(2023.01); H05B 6/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열화상(thermographic), 적외선(infrared), 카메라(camera), 조리물(cooking object), 온도(temperature), 보정(correction)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0064242 A (SAMSUNG ELECTRONICS CO., LTD.) 10 May 2023 (2023-05-10)<br>See paragraphs [0051]-[0056] and figure 1. | 1-15 |
| Y | JP 2018-040670 A (HAMAMATSU PHOTONICS K.K.) 15 March 2018 (2018-03-15)<br>See paragraphs [0005] and [0026]-[0031] and figure 2. | 1-15 |
| A | JP 2017-150825 A (HAMAMATSU PHOTONICS K.K.) 31 August 2017 (2017-08-31)<br>See paragraphs [0016]-[0022] and figures 1 and 2. | 1-15 |
| A | KR 10-2021-0003664 A (SAMSUNG ELECTRONICS CO., LTD.) 12 January 2021 (2021-01-12)<br>See paragraphs [0049]-[0078] and figures 3 and 4. | 1-15 |
| A | JP 2004-111055 A (MITSUBISHI ELECTRIC CORP. et al.) 08 April 2004 (2004-04-08)<br>See paragraphs [0009]-[0031] and figure 1. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 February 2025** | **17 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/016278**

| Patent document cited in search report | | | Publication date (day/month/year) | Patent family member(s) | | | Publication date (day/month/year) |
|---|---|---|---|---|---|---|---|
| KR | 10-2023-0064242 | A | 10 May 2023 | US | 2024-0180361 | A1 | 06 June 2024 |
| | | | | WO | 2023-080435 | A1 | 11 May 2023 |
| JP | 2018-040670 | A | 15 March 2018 | JP | 6682408 | B2 | 15 April 2020 |
| JP | 2017-150825 | A | 31 August 2017 | JP | 6682294 | B2 | 15 April 2020 |
| KR | 10-2021-0003664 | A | 12 January 2021 | EP | 3956609 | A1 | 23 February 2022 |
| | | | | EP | 3956609 | A4 | 22 June 2022 |
| | | | | JP | 2021-009002 | A | 28 January 2021 |
| | | | | US | 11353219 | B2 | 07 June 2022 |
| | | | | US | 2021-0003289 | A1 | 07 January 2021 |
| | | | | WO | 2021-002670 | A1 | 07 January 2021 |
| JP | 2004-111055 | A | 08 April 2004 | JP | 4077285 | B2 | 16 April 2008 |

Form PCT/ISA/210 (patent family annex) (July 2022)